# FASCICULE DE BREVET EUROPEEN

(11) **EP 2 570 326 B1**
(45) Date de publication et mention de la délivrance du brevet: **23.04.2014**
(21) Numéro de dépôt: 12183443.6
(22) Date de dépôt: 07.09.2012
(51) Int. Cl.: B62D 3/12, F16H 57/027

(54) **Dispositif d'évacuation de liquide et d'échange d'air pour direction de véhicule automobile**
Vorrichtung für den Flüssigkeitsabfluss und den Luftaustausch für die Lenkung eines Kraftfahrzeugs
Liquid discharge and air exchange device for the steering of a motor vehicle

(30) Priorité: 19.09.2011 FR 1158295
(43) Date de publication de la demande: 20.03.2013
(73) Titulaire: Jtekt Europe, 69540 Irigny (FR)
(72) Inventeur: Pantale, David, 69126 BRINDAS (FR)
(74) Mandataire: Chevalier, Renaud Philippe

(56) Documents cités:
- EP-A1- 1 300 319
- DE-A1-102007 015 329
- DE-A1-102008 048 813

## Description

La présente invention concerne, d'une façon générale, les systèmes de direction à crémaillère des véhicules automobiles. Plus particulièrement, cette invention se rapporte à un dispositif d'évacuation de liquide et d'échange d'air pour direction de véhicule automobile. Ainsi, l'invention propose un dispositif qui permet une évacuation potentielle de liquide et en particulier d'eau qui pénètrerait à l'intérieur d'une direction de véhicule automobile, en associant à ce dispositif une fonction d'échange d'air entre l'intérieur et l'extérieur de la direction, ceci en cas d'écart de pression entre l'intérieur et l'extérieur de cette direction.

L'intérieur d'un système de direction de véhicule automobile, qui est en général l'intérieur du carter de direction, est une zone fermée et étanche qui ne doit en aucun cas renfermer de l'eau ou tout autre liquide indésirable, provenant de l'extérieur de la direction.

En effet, la présence d'eau ou d'un autre liquide pourrait provoquer une corrosion qui endommagerait des parties fonctionnelles de la direction, ou éventuellement un blocage du système de direction par gel du liquide qui bloquerait une partie de la direction ou qui « collerait » entre elles deux parties de cette direction. Or, une entrée de liquide dans une direction n'est nullement exclue et peut se produire notamment par suite d'un endommagement d'une zone d'étanchéité de la direction, par exemple par suite du percement d'un soufflet de la direction.

De plus, et malgré l'étanchéité recherchée d'une manière générale, il est important dans les systèmes de direction de maintenir autant que possible une pression sensiblement égale entre l'intérieur et l'extérieur de la direction, par un échange d'air. En effet, une forte différence de pression entre l'intérieur et l'extérieur peut conduire à des déformations des parties souples de la direction, en particulier des soufflets, amenant une détérioration ou même une destruction de ces soufflets. L'écart de pression entre l'intérieur et l'extérieur peut aussi être la cause de phénomènes d'aspiration d'air extérieur, notamment à travers les fils d'alimentation électrique de la direction, avec un risque d'entrée d'air humide dans ces fils et dans la direction, pouvant amener là aussi des phénomènes de corrosion, voire de rupture d'isolation électrique et d'incendie. Ces risques sont réels et ils existent notamment en cas de changement brutal de la température ambiante.

Comme on le comprend, il est donc nécessaire, au sein d'un système de direction, d'éviter à la fois le phénomène de rétention de liquide ou d'humidité et le phénomène d'entrée d'air, phénomènes qui du reste sont en partie liés entre eux.

Il existe déjà de nombreuses propositions de dispositifs qui permettent de maintenir un équilibre des pressions entre l'intérieur et l'extérieur d'une direction, dispositifs qui d'une manière générale comportent une partie « respirante » agencée pour permettre une circulation d'air entre l'intérieur et l'extérieur de la direction, tout en empêchant une entrée de liquide dans la direction.

Une première solution connue consiste à rendre les soufflets eux-mêmes « respirants », ce qui nécessite toutefois une fabrication spéciale des soufflets - voir les documents de brevets US3927578 et DE19917392.

Un autre type de solutions connues consiste à prévoir, dans le carter de direction, une ouverture dans laquelle est insérée une pastille en matière perméable à l'air mais hydrophobe - voir le document de brevet FR2830505 (ou son équivalent EP1300319).

D'autres solutions connues associent l'élément perméable mais hydrophobe soit au poussoir (voir par exemple les documents de brevets FR2827562 et FR2829985), soit à l'arbre d'entrée de la direction (voir par exemple les documents de brevets FR2830829 et FR2832972). Dans ce dernier cas, une communication est notamment réalisable entre l'intérieur de la direction et l'habitacle du véhicule.

Par ailleurs, on connaît quelques solutions permettant d'évacuer l'eau ou tout autre liquide qui entrerait accidentellement à l'intérieur d'une direction de véhicule automobile, éventuellement après détection de la présence de liquide dans la direction - voir les documents de brevets W02008/052915 et DE102007015327.

Plus particulièrement, DE-10 2007 015 329 décrit un dispositif (soupape) d'évacuation de liquide comprenant un corps (un flotteur, référencé 14, 17 dans ce document) monté mobile dans un logement dont le fond (référencé 15) communique avec l'extérieur de la direction (par un orifice de communication référencé 16), de manière à reposer normalement sur ce fond 15 en obturant de manière étanche la communication 16 avec l'extérieur, tandis qu'en présence d'eau ledit corps 14, 17 est soulevé du fond du logement et permet ainsi l'évacuation du liquide par la communication 16.

Toutefois, il n'existe actuellement aucun dispositif qui regrouperait les deux fonctions, respectivement d'évacuation de liquide et d'équilibrage des pressions d'air, de sorte qu'une protection complète des systèmes de direction nécessite l'implantation de deux dispositifs distincts, en deux points eux aussi nécessairement distincts. II en résulte une complication constructive et aussi de fabrication et de montage, donc des coûts importants.

La présente invention vise à éviter ces inconvénients, en fournissant un dispositif unique et combiné d'évacuation de liquide et d'échange d'air, réunissant ces deux fonctions dans une même structure et en un seul endroit, dans un but de simplification constructive et d'économie tant dans la fabrication que dans le montage.

A cet effet, l'invention a pour objet un dispositif d'évacuation de liquide et d'échange d'air, pour système de direction à crémaillère de véhicule automobile, dispositif qui, prévu pour être installé en un point bas du système de direction et en particulier de son carter, comprend un corps en une matière perméable à l'air mais non perméable à l'eau et aux autres liquides, ce corps étant monté mobile dans un logement dont le fond communique avec l'extérieur de la direction, de manière à reposer normalement sur ce fond en obturant la communication avec l'extérieur, tandis qu'en présence d'eau ou de liquide ledit corps est soulevé du fond du logement précité et permet ainsi l'évacuation du liquide par la communication précitée.

Le corps perméable à l'air mais non perméable à l'eau et aux autres liquides est, par exemple, réalisé en polytétrafluoréthylène (PTFE) poreux.

Dans un mode de réalisation préféré du dispositif objet de l'invention, ce corps est sollicité en direction du fond de son logement par un élément élastique, tel qu'un ressort hélicoïdal ou en forme de lame.

A l'opposé dudit corps, l'élément élastique prend avantageusement appui sous une plaque fixe de fermeture du logement de ce corps, la plaque de fermeture comportant au moins un perçage permettant au liquide d'atteindre le logement et également à l'air de circuler.

Le principe de l'invention repose sur la différence de densité entre, d'une part, l'eau ou le liquide présent à l'intérieur de la direction et, d'autre part, le corps réalisé en une matière perméable à l'air mais non perméable aux liquides, la densité dudit corps pouvant être soit la densité « naturelle » de sa matière, soit une densité moyenne réduite et ajustée en prévoyant un ou des évidements dans ce corps.

En l'absence de liquide à l'intérieur de la direction, le corps est appuyé par l'élément élastique contre le fond du logement, et il obture ainsi la communication entre ce logement et l'extérieur, tout en autorisant des échanges d'air entre l'intérieur et l'extérieur de la direction, en vue de l'équilibrage des pressions. Dans cette position d'obturation, l'étanchéité aux liquides peut être obtenue par la seule matière constitutive dudit corps. Cette étanchéité peut aussi être renforcée par l'ajout à la base dudit corps d'un moyen d'étanchéité spécifique tel qu'un joint, par exemple en élastomère.

En cas de présence d'eau à l'intérieur de la direction, la pression de liquide s'exerce sur le corps et, en raison de la différence de densité, ce corps est soulevé en comprimant l'élément élastique. Le soulèvement du corps dégage la communication du fond du logement avec l'extérieur, si bien que l'eau présente peut s'écouler vers l'extérieur par simple gravité, donc s'évacuer.

Lorsque tout le liquide aura été évacué, sa pression ne s'exercera plus sur le corps qui ainsi « retombera » au fond de son logement, le dispositif revenant alors de lui-même à sa position initiale de fermeture. L'élément élastique favorise ce retour en position initiale, et il maintient ensuite le contact entre le corps et le fond du logement.

Ainsi, un dispositif très simple, composé de seulement trois pièces (sans compter le carter qui le supporte) et localisé en un seul point convenablement choisi du carter de direction, suffit pour réaliser la « respiration » de la direction et additionnellement, en cas de nécessité, l'évacuation d'eau ou de liquide présent à l'intérieur de la direction, le dispositif devant seulement être « calibré » pour que l'obturation soit automatiquement rompue en cas de présence d'eau ou de liquide.

De toute façon, l'invention sera mieux comprise à l'aide de la description qui suit, en référence au dessin schématique annexé représentant, à titre d'exemple, une forme d'exécution de ce dispositif d'évacuation de liquide et d'échange d'air :
Figure 1 est une vue schématique en coupe d'un dispositif conforme à la présente invention, en position d'obturation ;
Figure 2 est une vue similaire à la figure 1, montrant le même dispositif en position d'évacuation de liquide.

Le dispositif de l'invention, indiqué dans son ensemble par le repère 1, est situé en un point bas d'un carter de direction 2, désigné aussi plus simplement comme « carter » dans la suite. L'intérieur du carter 2, donc de la direction est indiqué par IN, et l'extérieur de la direction est indiqué par EX.

Le dispositif 1 comprend un logement 3 creusé dans la paroi du carter 2, le logement 3 étant ici de forme cylindro-tronconique. Un trou 4 est percé dans le carter 2, sur le fond 5 du logement 3, pour faire communiquer ce logement 3 avec l'extérieur EX.

A l'intérieur du logement 3 est monté mobile un corps 6 en matière perméable à l'air mais non perméable à l'eau et aux autres liquides, le corps 6 étant par exemple réalisé en polytétrafluoréthylène (PTFE) poreux. Le corps 6 possède une forme cylindro-tronconique, en correspondance avec la forme du logement 3 mais ménageant un jeu 7 entre ce corps 6 et la paroi dudit logement.

Une plaque de fermeture 8 est montée du côté intérieur IN du carter 2, de manière à recouvrir le logement 3. La plaque 8 comporte des trous ou perçages 9, faisant communiquer l'intérieur IN du carter 2 avec le logement 3. Cette plaque 8 est fixée au carter 2 par toute technique appropriée : montage en force, vissage, collage, soudage, sertissage ou autre.

Le ressort 10, ici de forme hélicoïdale, est monté dans le logement 3 et prend appui, d'une part, dans un évidement 11 du corps 6 et, d'autre part, sous la plaque de fermeture 8. La compression du ressort 10 exerce sur le corps 6 une poussée orientée de haut en bas, donc vers le fond 5 du logement 3.

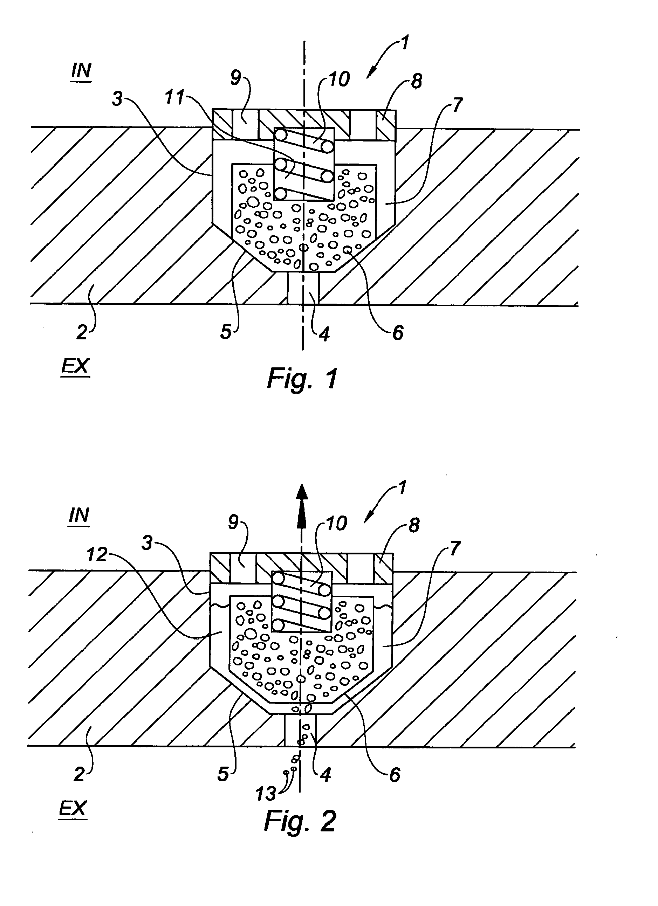

La figure 1 montre le dispositif 1 dans une position normale d'obturation, qu'il occupe en l'absence d'eau ou de tout liquide à l'intérieur IN du carter 2. Le ressort 10 exerce alors sur le corps 6 une poussée orientée de haut en bas suffisante pour presser la base de ce corps 6 contre le fond 5 du logement 3. Le trou de communication 4 se trouve alors obturé, mais la nature de la matière du corps 6 autorise une circulation d'air, soit de l'intérieur IN vers l'extérieur EX, soit de l'extérieur EX vers l'intérieur IN de la direction, pour un équilibrage entre la pression intérieure et la pression extérieure.

La figure 2 montre le même dispositif 1 en cas de présence d'eau ou d'un autre liquide 12 à l'intérieur IN du carter 2, plus particulièrement au cours de l'évacuation de ce liquide vers l'extérieur EX de la direction. La pression du liquide 12, s'exerçant sur le corps 6, soulève alors ce corps 6 à l'encontre de la force du ressort 10, de sorte que le corps 6 dégage le débouché du trou 4, l'étanchéité précédemment réalisée se trouvant rompue. Le liquide 12 peut alors s'écouler vers l'extérieur au travers du trou 4, par l'effet de la gravité, le liquide ainsi évacué étant figuré sous la forme de gouttes en 13.

Dès que le liquide 12 aura été évacué, le corps 6 « retombera » sur le fond 5 du logement 3, obturant à nouveau le débouché du trou 4, le dispositif étant ainsi parfaitement réversible et prêt pour une nouvelle évacuation de liquide, si nécessaire.

Dans l'exemple décrit jusqu'ici et illustré au dessin, le corps 6 est monté dans un logement 3 ménagé directement dans la paroi du carter de direction 2. Toutefois, selon une possibilité alternative, le dispositif de l'invention peut être conçu comme un dispositif séparé, délimitant par lui-même le logement 3 du corps 6, ce dispositif séparé étant prévu pour être mis en place et immobilisé dans un trou correspondant du carter de direction 2. Dans ce dernier cas, tout type de liaison entre le dispositif et le carter est envisageable, en particulier un assemblage vissé ou une fixation par serrage dans le carter 2.

Comme il va de soi, et comme il résulte de ce qui précède, l'invention ne se limite pas à la seule forme d'exécution de ce dispositif d'évacuation de liquide et d'échange d'air qui a été décrite ci-dessus, à titre d'exemple ; elle en embrasse, au contraire, toutes les variantes de réalisation et d'application respectant le même principe.

En particulier, on ne s'éloignerait pas du cadre de l'invention :
- En modifiant la matière constitutive du corps, pourvu que celle-ci possède les propriétés requises de perméabilité / imperméabilité et une densité appropriée ;
- En prévoyant des trous de communication plus ou moins nombreux, tant au fond du logement que dans la plaque de fermeture ;
- En ayant recours à tous moyens équivalents, notamment pour le ressort hélicoïdal qui est remplaçable par tout élément élastique, tel qu'un ressort à lame de configuration plate ;
- En ajoutant tous moyens complémentaires d'étanchéité, tels qu'un joint en élastomère, sur ledit corps ou coopérant avec ce dernier ;
- En positionnant le dispositif en tout point bas approprié, pouvant être soit le point le plus bas de la direction, soit un point bas autre où un liquide pourrait s'accumuler et provoquer une dégradation dangereuse pour l'intégrité de fonctionnement du système de direction ;
- En destinant ce dispositif à une direction à crémaillère de tout type, avec ou sans assistance et avec carter de structure quelconque.

## Revendications

1. Dispositif d'évacuation de liquide et d'échange d'air, pour système de direction à crémaillère de véhicule automobile, **caractérisé en ce que**, ce dispositif (1) étant prévu pour être installé en un point bas du système de direction et en particulier du carter de direction (2), celui-ci comprend un corps (6) en matière perméable à l'air mais non perméable à l'eau et aux autres liquides, ce corps (6) étant monté mobile dans un logement (3) dont le fond (5) communique avec l'extérieur (EX) de la direction, de manière à reposer normalement sur ce fond (5) en obturant la communication (4) avec l'extérieur (EX), tandis qu'en présence d'eau ou de liquide ledit corps (6) est soulevé du fond (5) du logement (3) précité et permet ainsi l'évacuation du liquide par la communication (4).

2. Dispositif selon la revendication 1, **caractérisé en ce que** le corps (6) perméable à l'air mais non perméable à l'eau et aux autres liquides est réalisé en polytétrafluoréthylène (PTFE) poreux.

3. Dispositif selon la revendication 1 ou 2, **caractérisé en ce que** le corps (6) est sollicité en direction du fond (5) de son logement (3) par un élément élastique, tel qu'un ressort (10) hélicoïdal ou en forme de lame.

4. Dispositif selon la revendication 3, **caractérisé en ce que** l'élément élastique (10) prend appui sous une plaque fixe (8) de fermeture du logement (3) de ce corps (6), la plaque de fermeture (8) comportant au moins un perçage (9) permettant au liquide d'atteindre le logement (3) et également à l'air de circuler.

5. Dispositif selon l'une quelconque des revendications 1 à 4, **caractérisé en ce qu'**un ou des évidements sont prévus dans le corps (6), pour réduire et ajuster la densité moyenne de ce corps.

6. Dispositif selon l'une quelconque des revendications 1 à 5, **caractérisé en ce qu'**un moyen d'étanchéité tel qu'un joint, par exemple en élastomère, est ajouté à la base dudit corps (6).

7. Dispositif selon l'une quelconque des revendications 1 à 6, **caractérisé en ce que** le logement (3) du corps (6) est ménagé directement dans la paroi du carter de direction (2).

8. Dispositif selon l'une quelconque des revendications 1 à 6, **caractérisé en ce qu'**il est conçu comme un dispositif séparé, délimitant par lui-même le logement (3) du corps (6), ce dispositif séparé étant prévu pour être mis en place et immobilisé dans un trou correspondant du carter de direction (2).

## Patentansprüche

1. Vorrichtung zum Ablassen von Flüssigkeit und Austauschen von Luft für ein Kraftfahrzeug-Zahnstangenlenksystem, **dadurch gekennzeichnet, dass** diese Vorrichtung (1) dazu gedacht ist, an einem tiefen Punkt des Lenksystems und insbesondere des Lenkgehäuses (2) installiert zu sein, umfassend einen Körper (6) aus einem Material, das für Luft durchlässig aber für Wasser und andere Flüssigkeiten undurchlässig ist, wobei dieser Körper (6) bewegbar in einer Aufnahme (3) eingebaut ist, deren Boden (5) mit dem äußeren Bereich (EX) der Lenkung in Verbindung steht, um normalerweise auf diesem Boden (5) zu liegen und dabei die Verbindung (4) mit dem äußeren Bereich (EX) zu verschließen, während der Körper (6) bei Vorliegen von Wasser oder Flüssigkeit vom Boden (5) der Aufnahme (3) abgehoben wird und somit das Ablassen der Flüssigkeit durch die Verbindung (4) erlaubt.

2. Vorrichtung nach Anspruch 1, **dadurch gekennzeichnet, dass** der Körper (6), der für Luft durchlässig aber für Wasser und andere Flüssigkeiten undurchlässig ist, aus porösem Polytetrafluorethylen (PTFE) ausgebildet ist.

3. Vorrichtung nach Anspruch 1 oder 2, **dadurch gekennzeichnet, dass** der Körper (6) von einem elastischen Element (10), wie etwa einer Schrauben-oder Blattfeder, in Richtung auf den Boden (5) seiner Aufnahme (3) vorgespannt ist.

4. Vorrichtung nach Anspruch 3, **dadurch gekennzeichnet, dass** sich das elastische Element (10) unter einer festen Verschlussplatte (8) der Aufnahme (3) dieses Körpers (6) abstützt, wobei die Verschlussplatte (8) mindestens eine Durchbohrung (9) umfasst, die es der Flüssigkeit ermöglicht, die Aufnahme (3) zu erreichen, und auch die Zirkulation der Luft ermöglicht.

5. Vorrichtung nach einem der Ansprüche 1 bis 4, **dadurch gekennzeichnet, dass** eine oder mehrere Aussparungen in dem Körper (6) bereitgestellt wird bzw. werden, um die mittlere Dichte dieses Körpers zu reduzieren und anzupassen.

6. Vorrichtung nach einem der Ansprüche 1 bis 5, **dadurch gekennzeichnet, dass** ein Dichtungsmittel, wie etwa eine Dichtung, beispielsweise aus Elastomer, zu der Basis des Körpers (6) hinzugefügt wird.

7. Vorrichtung nach einem der Ansprüche 1 bis 6, **dadurch gekennzeichnet, dass** die Aufnahme (3) des Körpers (6) direkt in der Wand des Lenkgehäuses (2) eingerichtet ist.

8. Vorrichtung nach einem der Ansprüche 1 bis 6, **dadurch gekennzeichnet, dass** sie wie eine getrennte Vorrichtung ausgelegt ist, die an sich die Aufnahme (3) des Körpers (6) begrenzt, wobei diese getrennte Vorrichtung vorgesehen ist, um in einem Loch, das dem Lenkgehäuse (2) entspricht, eingesetzt und festgelegt zu werden.

## Claims

1. A device for liquid discharge and air exchange, for a rack steering system of a motor vehicle, **characterized in that**, this device (1) being provided to be installed at a low point of the steering system and in particular of the steering casing (2), said device comprises a body (6) made of a material permeable to air but non permeable to water and other liquids, this body (6) being movably mounted in a housing (3), the bottom (5) of which communicates with the outside (EX) of the steering, so as to normally rest on this bottom (5) thus blocking the communication (4) with the outside (EX), while in the presence of water or liquid, said body (6) is lifted off the bottom (5) of the aforementioned housing (3), and allows thus discharge of liquid through the communication (4).

2. The device according to claim 1, **characterized in that** the body (6) permeable to air but non permeable to water and other liquids is made up from porous polytetrafluoroethylene (PTFE).

3. The device according to claim 1 or 2, **characterized in that** the body (6) is biased towards the bottom (5) of the housing (3) by an elastic member, such as a coil spring (10) or a leaf-shaped spring.

4. The device according to claim 3, **characterized in that** the elastic member (10) is supported under a stationary plate (8) for closing the housing (3) of this body (6), the closing plate (8) comprising at least one bore (9) allowing the liquid to reach the housing (3) and allowing also the air to flow.

5. The device according to any one of claims 1 to 4, **characterized in that** one or more recesses are provided in the body (6), to reduce and adjust the average density of this body.

6. The device according to any one of claims 1 to 5, **characterized in that** a sealing means such as a seal, for example an elastomeric seal, is added to the base of said body (6).

7. The device according to any one of claims 1 to 6, **characterized in that** the housing (3) of the body (6) is directly arranged in the wall of the steering casing (2).

8. The device according to any one of claims 1 to 6, **characterized in that** it is designed as a separate device, delimiting by itself the housing (3) of the body (6), this separate device being provided to be placed and immobilized in a corresponding hole of the steering casing (2).
